# EUROPEAN PATENT APPLICATION

(11) **EP 4 742 347 A1**
(43) Date of publication of application: **13.05.2026**
(21) Application number: 25752519.6
(22) Date of filing: 03.02.2025
(51) Int. Cl.: H01M 10/04, B23K 37/04, B23K 26/16

(54) **SECONDARY BATTERY MANUFACTURING EQUIPMENT AND METHOD FOR MANUFACTURING SECONDARY BATTERY BY USING SAME**

(30) Priority: 08.02.2024 KR 20240019288
(71) Applicant: LG Energy Solution, Ltd., Seoul 07335 (KR)
(72) Inventor: LEE, Jin Yong, Daejeon 34122 (KR); YOON, Myeong Ho, Daejeon 34122 (KR); CHOI, Jae Ho, Daejeon 34122 (KR); HWANG, In Woo, Daejeon 34122 (KR); PARK, Bae Geon, Daejeon 34122 (KR); SHIM, Sung Joon, Daejeon 34122 (KR); JANG, Yun Ho, Daejeon 34122 (KR); KIM, Kyung Joo, Daejeon 34122 (KR)
(74) Representative: Goddar, Heinz J.
(86) International application number: PCT/KR2025/099212
(87) International publication number: WO 2025/170411

(57) **Abstract**

According to exemplary embodiments, a secondary battery manufacturing facility is provided. The facility includes: a first jig assembly configured to fix a workpiece and comprising a first opening exposing a surface of the workpiece; a second jig assembly configured to fix the workpiece and comprising a second opening exposing a surface of the workpiece; a beam irradiation system configured to irradiate a welding beam onto the workpiece through one of the first and second openings; and a cleaning assembly configured to clean the first opening and the second opening.

## Description

### [Technical Field]

The present disclosure relates to a secondary battery manufacturing facility and a method for manufacturing a secondary battery using the facility.

This application claims the benefit of Korean Patent Application No. 10-2024-0019288, filed on February 8, 2024, the disclosure of which is incorporated herein by reference.

### [Background]

Unlike primary batteries, secondary batteries can be charged and discharged a plurality of times. Secondary batteries are widely used as an energy source for a variety of wireless devices, including handsets, laptops, and cordless vacuum cleaners. In recent years, the primary use of secondary batteries has shifted from mobile devices to mobility, as energy density improvements and economies of scale have dramatically reduced the manufacturing cost per unit capacity of secondary batteries and increased the range of battery electric vehicles (BEVs) to be on par with fuel vehicles.

To keep up with the rapid growth in demand for secondary batteries for mobility, cell manufacturers are facing huge capital expenditures. To maximize the return on capital invested, companies are looking to increase productivity per line, and research is ongoing to improve yields and increase productivity.

### [Summary]

### [Technical Problem]

The technical challenge of the present disclosure is to provide a productive secondary battery manufacturing facility and a method for manufacturing secondary batteries using the facility.

### [Technical Solution]

According to exemplary embodiments of the present disclosure to address the above challenges, a secondary battery manufacturing facility is provided. The facility includes: a first jig assembly configured to fix a workpiece and comprising a first opening exposing a surface of the workpiece; a second jig assembly configured to fix the workpiece and comprising a second opening exposing a surface of the workpiece; a beam irradiation system configured to irradiate a welding beam onto the workpiece through one of the first and second openings; and a cleaning assembly configured to clean the first opening and the second opening.

The cleaning assembly is configured to move between a working position overlapping each of the first and second openings and a standby position spaced apart from the working position.

The first jig assembly is configured to move in a first direction toward the second jig assembly to fix the workpiece.

The cleaning assembly includes a tool body and a spatter collection pan coupled to the tool body.

The tool body includes a first portion configured to clean the first opening and a second portion configured to clean the second opening.

The first portion has a tapered shape toward the first opening.

The second portion has a tapered shape toward the second opening.

The tool body has a hardness lower than the hardness of a jig of the first jig assembly.

According to exemplary embodiments, a secondary battery manufacturing method is provided. The method includes: moving the cleaning assembly comprising the tool body to the working position; and moving a first jig assembly comprising a first opening and a second jig assembly comprising a second opening toward the tool body to remove spatter from the first and second openings.

In the working position, the tool body overlaps each of the first and second openings.

The tool body includes a first portion having a tapered shape toward the first opening and a second portion having a tapered shape toward the second opening.

The spatter is removed by physical contact with the tool body.

The tool body has a hardness lower than the hardness of the jig of a first jig assembly.

After removing the spatter from the first opening, the cleaning assembly is moved to a standby position spaced apart from the working position.

### [Advantageous Effects]

A secondary battery manufacturing facility according to exemplary embodiments of the present disclosure includes a cleaning assembly. Accordingly, the time required to clean the jig assembly can be reduced, and the productivity of secondary battery manufacturing can be increased.

The effects that may be obtained from the exemplary embodiments of the present disclosure are not limited to those mentioned above, and other effects not mentioned may be clearly derived and understood by one of ordinary skill in the art to which the exemplary embodiments of the present disclosure belong from the following description. That is, unintended effects of practicing the exemplary embodiments of the present disclosure may also be derived from the exemplary embodiments of the present disclosure by one of ordinary skill in the art.

### [Brief Description of the Drawings]

FIG. 1 is a diagram illustrating a secondary battery manufacturing facility according to exemplary embodiments.
FIG. 2 is a diagram illustrating a secondary battery manufacturing facility according to exemplary embodiments.
FIG. 3 shows the openings of the first and second jig assemblies.
FIG. 4 is a flowchart to illustrate a method for manufacturing a secondary battery according to exemplary embodiments.
FIG. 5 is a diagram illustrating a method for manufacturing a secondary battery according to exemplary embodiments.
FIG. 6 is a diagram illustrating a method for manufacturing a secondary battery according to exemplary embodiments.
FIG. 7 shows the cleaning of the openings of the first and second jig assemblies by the cleaning assembly.

### [Best Mode for Carrying out the Invention]

Hereinafter, preferred embodiments of the present disclosure will be described in detail with reference to the accompanying drawings. It should be noted that the terms and words used in this specification and claims are not to be construed in their ordinary or dictionary sense, but rather in a sense and concept consistent with the technical idea of the disclosure, based on the principle that the inventor may define the concept of a term as he sees fit to best describe his disclosure.

Accordingly, it is to be understood that the embodiments described herein and the configurations shown in the drawings are only the most preferred embodiments of the disclosure and are not exhaustive of the technical ideas of the disclosure, and that there may be various equivalents and modifications that may be substituted for them at the time of filing.

Furthermore, in describing the present disclosure, specific descriptions of related known configurations or features are omitted where it is deemed that such detailed description would obscure the essence of the disclosure.

Because the embodiments of the present disclosure are provided to more fully explain the disclosure to those of ordinary skill in the art, the shapes and sizes of components in the drawings may be exaggerated, omitted, or shown schematically for clarity. Accordingly, the size or proportion of each component is not necessarily indicative of its actual size or proportion.

### (First embodiment)

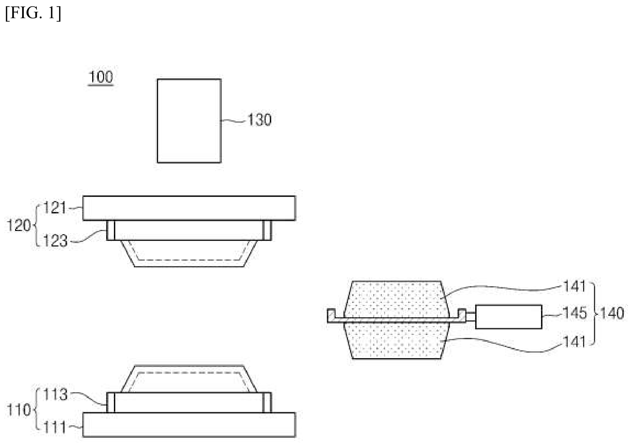

FIG. 1 is a diagram illustrating a secondary battery manufacturing facility 100, according to exemplary embodiments.

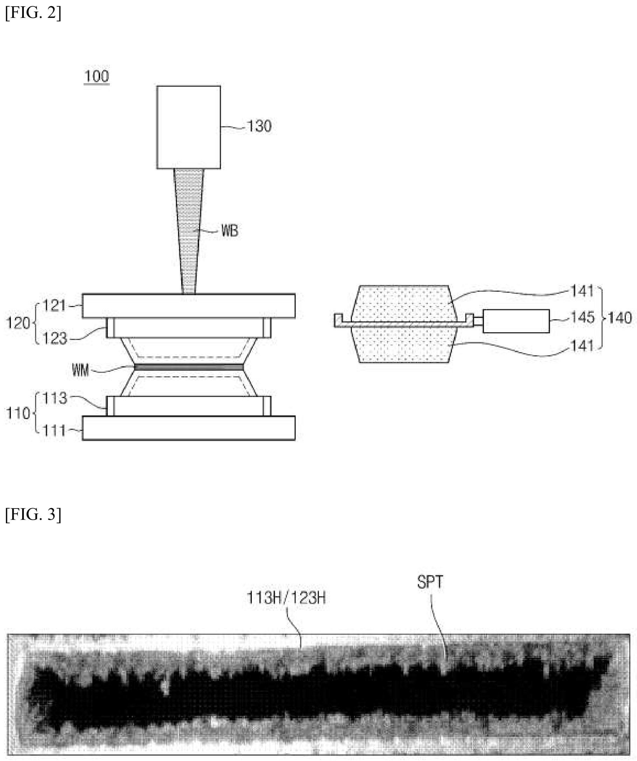

FIG. 2 is a diagram illustrating a secondary battery manufacturing facility 100, according to exemplary embodiments. More specifically, FIG. 2 illustrates a secondary battery manufacturing facility 100 loaded with workpieces WM.

FIG. 3 illustrates the openings 113H/123H of the first and second jig assemblies 110, 120.

Referring to FIGS. 1 through 3, according to exemplary embodiments, the secondary battery manufacturing facility 100 may include a first jig assembly 110, a second jig assembly 120, a beam irradiation system 130, and a cleaning assembly 140.

The secondary battery manufacturing facility 100 may be configured to perform a secondary battery manufacturing process. The secondary battery manufacturing facility 100 may be configured to perform a welding process. The secondary battery manufacturing facility 100 may be configured to perform a laser welding process. The secondary battery manufacturing facility 100 may be configured to weld elements of the workpiece WM by irradiating the workpiece WM with a welding beam WB. According to exemplary embodiments, the workpiece WM may include electrode leads and busbars.

The first jig assembly 110 and the second jig assembly 120 may be configured to move relative to each other such that the first jig assembly 110 and the second jig assembly 120 move closer (or further away). For example, the first jig assembly 110 may move toward the stationary second jig assembly 120, the second jig assembly 120 may move toward the stationary first jig assembly 110, or the first and second jig assemblies 110, 120 may move toward each other.

The first opening 113H of the first jig 113 and the second opening 123H of the second jig 123 may overlap in the first direction, and the first jig assembly 110 and the second jig assembly 120 may be configured to move in the first direction.

The first jig assembly 110 and the second jig assembly 120 may be configured to clamp the workpiece WM by moving in a first direction. The first jig assembly 110 and the second jig assembly 120 may be configured to clamp the workpiece WM by pressing the workpiece WM interposed between the first jig assembly 110 and the second jig assembly 120.

The first jig assembly 110 may include a first base 111 and a first jig 113. The first jig 113 may include a first opening 113H. The first opening 113H of the first jig 113 may expose a first surface of the workpiece WM. The first jig 113 may be coupled to the first base 111. The first jig 113 may be moved by the first base 111.

The second jig assembly 120 may include a second base 121 and a second jig 123. The second jig 123 may include a second opening 123H. The second opening 123H of the second jig 123 may expose a second surface of the workpiece WM. The second surface may be opposite the first surface. The second jig 123 may be coupled to the second base 121. The second jig 123 may be moved by the second base 121.

The beam irradiation system 130 may be configured to generate the welding beam WB and irradiate the welding beam WB onto the workpiece WM. The beam irradiation system 130 may be a laser device. The beam irradiation system 130 may include an oscillator configured to generate the welding beam WB and may include a scanner head configured to direct, and irradiate, the welding beam WB.

According to exemplary embodiments, the welding beam WB may be in the near infrared. According to exemplary embodiments, the wavelength of the welding beam WB may be in the range of about 750 nm to about 2500 nm. According to exemplary embodiments, the wavelength of the welding beam WB may be about 1070 nm.

In one example, the oscillator may be a solid-state laser device, such as, but not limited to, a semiconductor laser device, an Nd:YAG laser device, a Ti-Sapphire laser device, or a fiber laser device. As another example, the oscillator may be a liquid laser device, such as a pigmented laser device. As another example, the oscillator may be a gaseous laser device, such as a helium-neon laser, a carbon dioxide laser, an excimer laser, or the like.

The welding beam WB generated by the first beam source may be coupled to the scanner head. According to exemplary embodiments, the welding beam WB may be delivered to the scanner head via any one of free space optics, optical integrated circuit, and fiber optics.

As the workpiece WM is processed by the welding beam WB, the first opening 113H of the first jig 113 and the second opening 123H of the second jig 123 may become contaminated. Spatter (SPT) may adhere to the first opening 113H of the first jig 113 and the second opening 123H of the second jig 123.

The spatter (SPT) attached to the first opening 113H of the first jig 113 and the second opening 123H of the second jig 123 can deform the profile of the first opening 113H of the first jig 113 and the second opening 123H of the second jig 123. The spatter attached to the first opening 113H of the first jig 113 and the second opening 123H of the second jig 123 may interfere with the welding beam WB, causing an incomplete weld or weak weld in the workpiece WM, which may reduce the yield of the secondary battery manufacturing.

The cleaning assembly 140 may be configured to clean the first opening 113H of the first jig 113 and the second opening 123H of the second jig 123. The cleaning assembly 140 may be configured to remove spatter SPT adhering to the first opening 113H of the first jig 113 and the second opening 123H of the second jig 123 by mechanical means.

The cleaning assembly 140 may include a tool body 141, a spatter collection pan, and a drive device 145. The tool body 141 may include a metallic material. The hardness of the tool body 141 may be different from the hardness of each of the first and second jigs 113, 123. The hardness of the tool body 141 may be smaller than the hardness of each of the first and second jigs 113, 123. Accordingly, damage to the first and second jigs 113, 123 may be prevented or mitigated during mechanical removal of the spatter SPT attached to the first opening 113H of the first jig 113 and the second opening 123H of the second jig 123.

The spatter collection pan may be configured to collect spatter SPT that separates from the first opening 113H of the first jig 113. The spatter collection pan may surround the tool body 141.

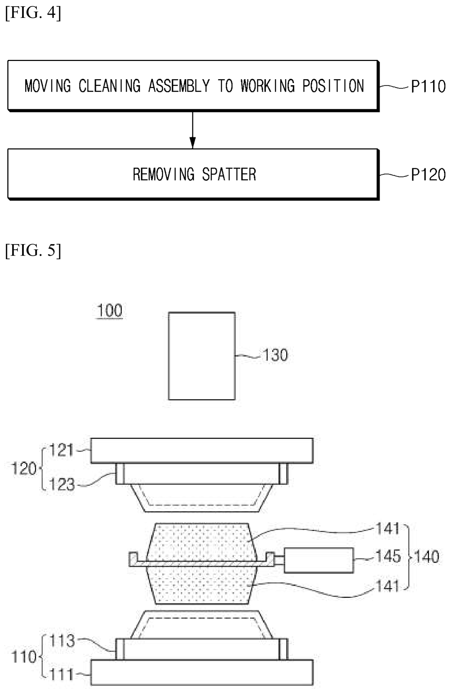

The drive device 145 may be configured to move the cleaning assembly 140. The drive device 145 may be configured to move the cleaning assembly 140 such that the cleaning assembly 140 is in the standby position of FIGS. 1 and 2, or such that the cleaning assembly 140 is in the working position of FIG. 5.

### (Second embodiment)

FIG. 4 is a flowchart to illustrate a method of manufacturing a secondary battery according to exemplary embodiments.

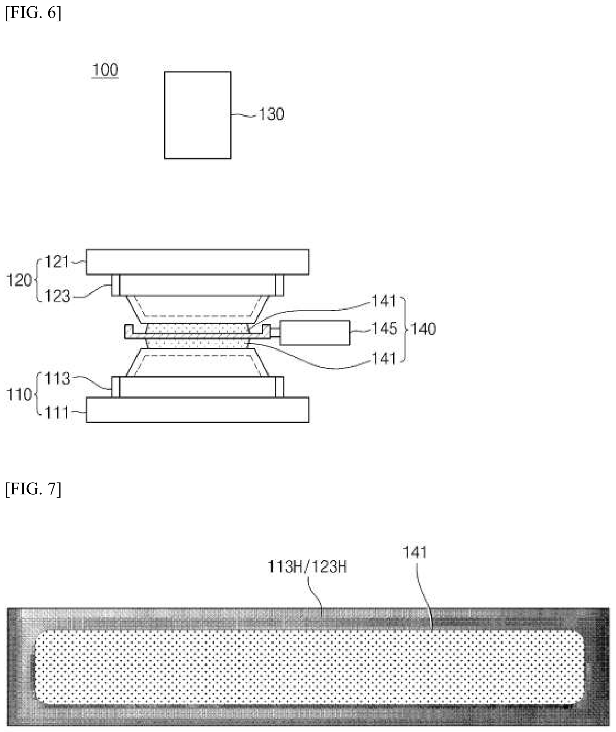

FIGS. 5 and 6 are drawings to illustrate methods for manufacturing a secondary battery, according to exemplary embodiments.

FIG. 7 illustrates cleaning of the openings 113H/123H of the first and second jig assemblies 110, 120 by the cleaning assembly 140.

Referring to FIGS. 3 through 5, at P110, the cleaning assembly 140 may be moved to a working position. The working position may be spaced apart from the standby position. Cleaning of the first opening 113H of the first jig 113 and the second opening 123H of the second jig 123 by the cleaning assembly 140 may be based on a predetermined maintenance interval. For example, if the processing of the workpiece WM (see FIG. 2) by the welding beam WB (see FIG. 2) has been performed more than a set number of times (e.g., 1000 times), the cleaning assembly 140 may be moved to a working position.

When the cleaning assembly 140 is in the working position, the tool body 141 may overlap the first opening 113H of the first jig 113 and the second opening 123H of the second jig 123.

Next, referring to FIGS. 3, 4, 6, and 7, at P120, the spatter SPT may be removed. Removing the spatter SPT may include moving the first jig assembly 110 and the second jig assembly 120 toward the tool body 141.

The tool body 141 may include a first portion corresponding to the first opening 113H of the first jig 113, and a second portion corresponding to the second opening 123H of the second jig 123. The first portion of the tool body 141 may have a tapered shape toward the first opening 113H. Accordingly, the cross-sectional area (e.g., horizontal cross-sectional area) of the tool body 141 may decrease toward the first opening 113H. The second portion of the tool body 141 may have a tapered shape toward the second opening 123H. Accordingly, the cross-sectional area (e.g., horizontal cross-sectional area) of the tool body 141 may become smaller toward the second opening 123H.

As the first jig assembly 110 and the second jig assembly 120 are moved toward the tool body 141, a first portion of the tool body 141 can be inserted into the first opening 113H of the first jig 113, and a second portion of the tool body 141 can be inserted into the second opening 123H of the second jig 123, whereby the tool body 141 can mechanically remove the spatter SPT through physical contact. The spatter SPT removed from the first opening 113H may be collected by the spatter collection pan.

According to exemplary embodiments, the first and second openings 113H, 123H are cleaned by moving the first and second jig assemblies 110, 120 in a manner for clamping the workpiece (WM, see FIG. 2), thereby eliminating the need to separate the first and second jigs 113, 123 from the first and second bases 111, 121 for cleaning of the first and second jigs 113, 123. Accordingly, the time required to separate and couple the first and second jigs 113, 123 may be reduced, and the productivity of secondary battery manufacturing may be increased.

The insertion depths into the first and second openings 113H, 123H of the tool body 141 may be determined based on the cleaning targets of the first and second jigs 113, 123. Since the first and second portions of the tool body 141 have a tapered shape, the greater the insertion depth into the first and second openings 113H, 123H of the tool body 141, the greater the amount of spatter SPT can be removed from the first and second openings 113H, 123H.

Unlike in FIG. 6, the second jig 123 may be cleaned after the first jig 113 is cleaned, or the first jig 113 may be cleaned after the second jig 123 is cleaned. Also, instead of the first jig assembly 110 and the second jig assembly 120 being moved toward the tool body 141, the tool body 141 may be configured to move toward the stationary first jig assembly 110 or the stationary second jig assembly 120.

After the first opening 113H of the first jig 113 and the second opening 123H of the second jig 123 have been cleaned, the first jig assembly 110 and the second jig assembly 120 may be disconnected from the tool body 141, and the cleaning assembly 140 may be moved to the standby position of FIG. 1.

The present disclosure has been described in more detail above with reference to the drawings and embodiments. However, it is to be understood that the configurations shown in the drawings or embodiments described herein are only one embodiment of the disclosure and do not represent all of the technical ideas of the disclosure, and that there may be various equivalents and modifications that may be substituted for them at the time of filing the present disclosure.

## Claims

1. A secondary battery manufacturing facility comprising:
a first jig assembly configured to fix a workpiece and comprising a first opening exposing a surface of the workpiece;
a second jig assembly configured to fix the workpiece and comprising a second opening exposing a surface of the workpiece;
a beam irradiation system configured to irradiate a welding beam onto the workpiece through one of the first and second openings; and
a cleaning assembly configured to clean the first opening and the second opening.

2. The secondary battery manufacturing facility of claim 1, wherein
the cleaning assembly is configured to move between a working position overlapping each of the first and second openings and a standby position spaced apart from the working position.

3. The secondary battery manufacturing facility of claim 1, wherein
the first jig assembly is configured to move in a first direction toward the second jig assembly to fix the workpiece.

4. The secondary battery manufacturing facility of claim 1, wherein
the cleaning assembly comprises a tool body and a spatter collection pan coupled to the tool body.

5. The secondary battery manufacturing facility of claim 4, wherein
the tool body comprises a first portion configured to clean the first opening and a second portion configured to clean the second opening.

6. The secondary battery manufacturing facility of claim 5, wherein
the first portion has a tapered shape toward the first opening.

7. The secondary battery manufacturing facility of claim 5, wherein
the second portion has a tapered shape toward the second opening.

8. The secondary battery manufacturing facility of claim 4, wherein
the tool body has a hardness lower than the hardness of a jig of the first jig assembly.

9. A secondary battery manufacturing method comprising:
moving the cleaning assembly comprising the tool body to the working position; and
moving a first jig assembly comprising a first opening and a second jig assembly comprising a second opening toward the tool body to remove spatter from the first and second openings.

10. The secondary battery manufacturing method of claim 9, wherein
in the working position, the tool body overlaps each of the first and second openings.

11. The secondary battery manufacturing method of claim 9, wherein
the tool body comprises a first portion having a tapered shape toward the first opening and a second portion having a tapered shape toward the second opening.

12. The secondary battery manufacturing method of claim 9, wherein
the spatter is removed by physical contact with the tool body.

13. The secondary battery manufacturing method of claim 9, wherein
the tool body has a hardness lower than the hardness of a jig of the first jig assembly.

14. The secondary battery manufacturing method of claim 9, wherein
after removing the spatter from the first opening, the cleaning assembly is moved to a standby position spaced apart from the working position.
